# FASCICULE DE BREVET EUROPEEN

(11) **EP 1 795 026 B1**
(45) Date de publication et mention de la délivrance du brevet: **01.06.2011**
(21) Numéro de dépôt: 05769825.0
(22) Date de dépôt: 28.07.2005
(51) Int. Cl.: H04W 8/24

(54) **GESTION DE TELECHARGEMENT DANS DES OBJETS COMMUNICANTS PORTABLES POUR OPERATION UNITAIRE PENDANT UNE CAMPAGNE**
VERWALTUNG DES HERUNTERLADENS IN TRAGBAREN KOMMUNIKATIONSOBJEKTEN FÜR EINZELEINHEITSBETRIEB WÄHREND EINER KAMPAGNE
MANAGING DOWNLOADING IN PORTABLE COMMUNICATING OBJECTS FOR A SINGLE-UNIT OPERATION DURING A CAMPAIGN

(30) Priorité: 27.09.2004 FR 0410226
(43) Date de publication de la demande: 13.06.2007
(73) Titulaire: Gemalto SA, 92190 Meudon (FR)
(72) Inventeur: BOUSSOUKAIA, Nadir, Rés. Les Cèdres de Prévalaye, 13012 Marseille (FR); MARTINENT, Frédéric, 13011 Marseille (FR); LOUBAUD, Laurent, 13590 Meyreuil (FR); PASCAL, Guillaume, 13600 La Ciotat (FR)
(86) Numéro de dépôt international: PCT/EP2005/053697
(87) Numéro de publication internationale: WO 2006/034903

(56) Documents cités:
- US-A1- 2004 018 831
- US-A1- 2004 076 131

## Description

La présente invention concerne le téléchargement de données depuis un serveur dans des objets communicants portables à travers un réseau de radiocommunications. En particulier, les objets communicants sont des cartes à puce, telles que des cartes SIM (Subscriber Identity Module), introduites dans des terminaux mobiles du réseau de radiocommunications.

Le serveur de téléchargement de données, également appelé plateforme d'administration de cartes OTA (Over The Air), comprend un logiciel qui permet à l'opérateur gérant le réseau de radiocommunications de conserver le contrôle des cartes à puce dans les terminaux mobiles et de modifier leur contenu. Ces opérations à l'initiative de l'opérateur (mode push) concernent par exemple le téléchargement d'un fichier dans des cartes prédéterminées du parc géré par l'opérateur, ou le téléchargement ou l'effacement d'une application déterminée, ou bien la modification de données d'un fichier ou d'une application déterminée dans des cartes gérées par l'opérateur.

Les données à télécharger dans les cartes à puce sont souvent transmises à travers un serveur de messages courts. Plusieurs messages courts sont bien souvent nécessaires pour télécharger une application ou un fichier. Un autre exemple peut être trouvée dans US 2004/076131 (QV HAl et AL) 22-04-2004.

L'invention s'intéresse plus particulièrement à la gestion d'une campagne de téléchargement de données pour mettre à jour massivement des cartes d'usager par le serveur de téléchargement de données OTA qui doit pouvoir aussi opérer des téléchargements unitaires dans les cartes d'usager soit à la demande de l'opérateur qui gère les cartes, soit à la demande des usagers possédant les cartes, en perturbant le moins possible une campagne.

Selon un premier exemple, un téléchargement unitaire est relatif à un unique fichier personnel qui est destiné à des usagers itinérants se trouvant fréquemment à l'étranger et qui contient plus d'une dizaine d'identificateurs de réseaux préférés gérés par des opérateurs avec lesquels l'opérateur du réseau gérant les cartes a contracté. Le fichier d'identificateurs de réseaux préférés est unique et a vocation à être téléchargé dans de nombreuses cartes d'usager prédéterminées de manière à ce que les usagers de ces cartes puissent l'utiliser lorsqu'ils iront à l'étranger.

Pour ce premier exemple, l'opérateur a actuellement deux possibilités pour télécharger ce fichier depuis le serveur OTA. Selon une première possibilité, l'opérateur décide de télécharger le fichier de manière unitaire, au fil de l'eau, la première fois qu'un usager intéressé est en itinérance (roaming), et ainsi de suite pour tous les usagers les uns après les autres, qui sont en itinérance. Selon une deuxième possibilité, dit en mode de campagne, le serveur envoie le fichier des identificateurs de réseaux préférés au cours d'une seule campagne vers les cartes dont les usagers ont souscrit à une option d'itinérance.

En mode campagne le nombre d'usagers ciblés peut atteindre plusieurs centaines de milliers ou millions.

Selon un deuxième exemple, un téléchargement unitaire est relatif à un unique fichier de noms et numéros de téléphone de commerciaux d'une entreprise à télécharger dans les cartes des usagers employés de l'entreprise.

Selon un troisième exemple, un téléchargement unitaire concerne une application facilitant la gestion du répertoire des numéros téléphoniques dans les cartes SIM. Cette application permet à un usager de sauvegarder tout son répertoire dans un serveur prédéterminé géré par l'opérateur chaque fois que l'usager enregistre un nouveau numéro téléphonique dans sa carte.

Selon ce troisième exemple, trois possibilités sont offertes. Suite à une publicité présentée à la télévision, l'usager appelle pendant la journée le centre d'appel de l'opérateur pour demander de télécharger l'application dans sa carte SIM. Cette opération est une opération unitaire déclenchée dans le serveur OTA par l'opérateur en mode d"'Assistance Client" (Customer Care). Selon une deuxième possibilité, l'usager prend l'initiative de commander des téléchargements (mode pull) en consultant lui-même depuis son terminal mobile le site de l'opérateur de manière à déclencher le téléchargement de l'application dans la carte SIM. Ce téléchargement est également une opération unitaire commandée dans le serveur OTA par l'usager en mode dit "Auto-Assistance" (Self Care). Selon une troisième possibilité, l'opérateur déclenche une opération de téléchargement en mode campagne sur plus d'un million d'usagers ciblés afin que le serveur OTA administre le téléchargement de l'application dans le million de cartes SIM.

Une opération unitaire à effectuer dans une carte à la demande de l'usager de la carte ou de l'opérateur est réalisée par l'un de modules unitaires inclus dans le serveur OTA.

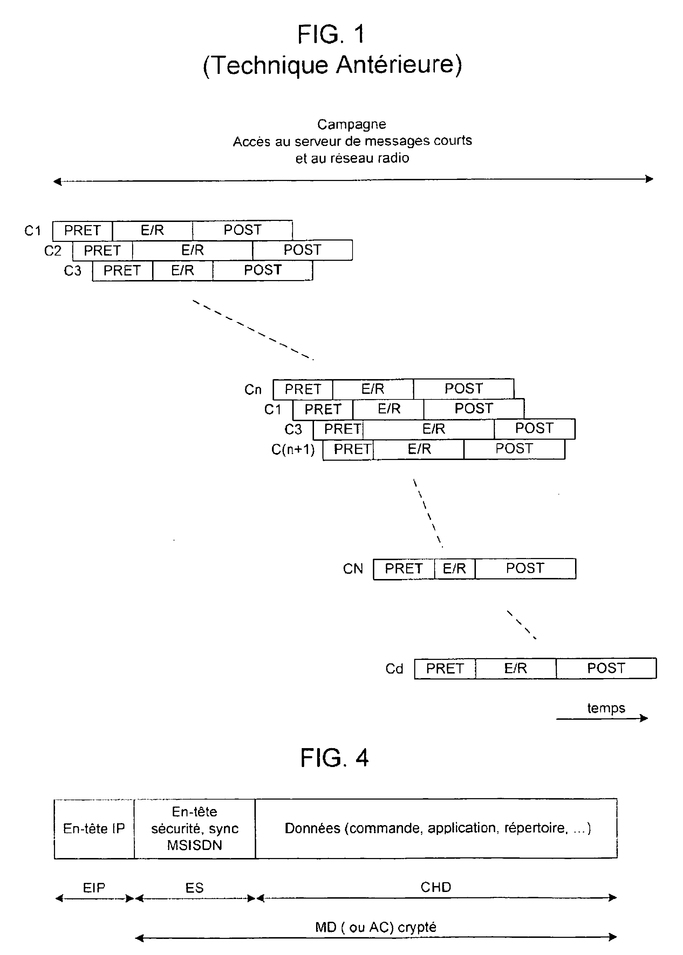

Dans la **figure 1** annexée, une opération unitaire réalisée par un module unitaire est représentée par un bloc et est composée de trois traitements élémentaires pour télécharger par l'intermédiaire d'un message court des données prédéterminées dans une carte à puce d'usager Cn parmi N cartes à puce C1 à CN dans des terminaux mobiles depuis le serveur de téléchargement OTA, avec l'indice n tel que 1 ≤ n ≤ N. Un premier traitement élémentaire PRET est relatif à un pré-traitement de données à formater en un message de données à transmettre à la carte à puce Cn. Le deuxième traitement élémentaire E/R s'étend depuis l'émission du message de données formatées par le serveur jusqu'à la réception de l'acquittement transmis par la carte à puce Cn dans le serveur. Le troisième traitement élémentaire est un post-traitement POST au cours duquel le serveur analyse l'acquittement reçu et mémorise d'éventuelles données contenues dans l'acquittement afin de les enregistrer en correspondance avec un numéro de la carte à puce Cn dans une base de données liée au serveur.

L'accès à la carte Cn est interdit (verrouillé = "locked") aux autres modules unitaires et à des modules de campagne pouvant requérir d'autres opérations dans la carte Cn, immédiatement par le module unitaire juste avant que l'opération unitaire dans la carte Cn débute, c'est-à-dire depuis le début du pré-traitement jusqu'à la fin du post-traitement relatifs à l'opération. Pour interdire l'accès, le module unitaire pose un indicateur d'accès (verrou) à un état d'interdiction d'accès dans une table de la base de données du serveur associée à la carte Cn afin d'interdire l'accès à celle-ci par tous les autres modules unitaires et les modules de campagne qui pourront lire l'état de l'indicateur d'accès tant que l'opération unitaire décidée dans la carte Cn n'est pas terminée. Si deux modules unitaires requièrent à accéder simultanément à la carte Cn, seulement l'un d'eux réalise son opération sur la carte Cn et soit refuse la réalisation de l'opération par l'autre module unitaire, soit n'autorise cette réalisation d'opération qu'après avoir libéré (déverrouillé = "unlocked") la carte Cn en mettant l'indicateur d'accès à un état d'autorisation d'accès. Le module unitaire suivant qui avait requis une opération dans la carte Cn surveille la libération de la carte Cn. Constatant le changement d'état de l'indicateur d'accès associée à la carte Cn, il accède à la carte Cn pour réaliser son opération.

Selon le mode campagne, l'un des modules de campagne inclus dans le serveur transmet le fichier des identificateurs de réseaux au cours d'une seule campagne vers N cartes à puce Cl à CN dont les usagers ont souscrit à une option d'itinérance. En mode campagne, le nombre d'usagers ciblés est très élevé et peut atteindre plusieurs centaines de milliers ou millions.

Au début de la campagne, le module de campagne pose N indicateurs d'accès (verrou) à l'état d'interdiction d'accès dans des tables du serveur associées aux N cartes, progressivement au début du pré-traitement pour chaque carte, afin d'interdire l'accès à chacune des N cartes par tous les modules unitaires et les autres modules de campagne, c'est-à-dire depuis le début du premier pré-traitement élémentaire jusqu'à la fin du dernier post-traitement relatifs à l'opération pendant la campagne.

Le module de campagne effectue la campagne comme montré à la figure 1.

Au début de la campagne, le module de campagne transmet successivement des messages préparés de données formatées vers les premières cartes C1, C2, C3, ... visées par la campagne et procède dès réception de l'acquittement de chacun des messages de données ainsi transmis, à l'analyse de l'acquittement. Comme un acquittement indique implicitement que le terminal mobile de l'usager est en état de recevoir et de traiter un message de données transmis précédemment, le module de campagne transmet un autre message préparé de données formatées après le post-traitement POST d'un acquittement qui vient d'être transmis par la carte de l'usager. Une succession de deux ensembles chacun à trois traitements élémentaires est indiquée relativement aux cartes C1 et C3 dans la figure 1.

N'importe quel module unitaire ou module de campagne requérant un accès à l'une Cn des cartes visées par la campagne pendant la campagne lit l'état de l'indicateur d'accès associé à la carte Cn dans la base de données afin de s'interdire l'accès à la carte Cn jusqu'à la fin de campagne et surveiller un changement d'état de l'indicateur d'accès devant survenir à la fin de campagne.

La campagne est terminée lorsque tous les acquittements attendus des messages de données transmis ont été traités. Toutefois certains acquittements ne seront jamais transmis par des cartes d'usager lorsque des terminaux mobiles incluant celles-ci ne sont pas connectés au réseau de radiocommunications pendant la campagne, ou lorsque notamment le serveur de messages courts et/ou le réseau de radiocommunications a perdu un ou plusieurs messages de données formatées destinés à une carte à puce. Le dernier bloc dans la figure 1 est associé à une dernière carte Cd qui peut être n'importe qu'elle carte visée par la campagne, a priori différente de la carte CN.

A la fin de la campagne, le module de campagne libère (déverrouille) carte par carte les cartes à puce C1 à CN visées par la campagne en mettant les indicateurs d'accès associés à ces cartes à l'état d'autorisation d'accès. Tous les modules unitaires et modules de campagne suivant, qui avaient requis une opération dans la carte Cn pendant la campagne précédente, constatent la libération d'accès de la carte Cn de manière à accéder chacun à leur tour à la carte Cn, le premier module ayant appliqué une requête d'accès à la base de données étant prioritaire et ainsi de suite.

Il apparaît que le mode campagne présente une complexité technique bien supérieure à celle du mode unitaire puisque le mode campagne consiste à répéter les opérations unitaires pour un très grand nombre de cartes, en respectant des contraintes de débit de messages courts et de durée de campagne ainsi que de surveillance du déroulement de campagne.

En particulier, le processus d'interdiction d'accès et d'autorisation d'accès décrit ci-dessus au début et à la fin d'une campagne impose au module de campagne et donc au serveur OTA de marquer les "images" de toutes les cartes concernées par la campagne par un état d'interdiction d'accès des indicateurs d'accès associés aux cartes. Ce marquage est très coûteux en temps machine dans le serveur d'autant plus que le nombre N de cartes peut atteindre plusieurs millions.

En outre ce marquage interdit l'accès à chaque carte concernée Cn par la campagne pendant toute la campagne et particulièrement pendant toutes les opérations unitaires représentées par les blocs à trois traitements élémentaires associées à la carte Cn dans la figure 1. Chaque pré-traitement élémentaire PRET associé à la carte Cn pourrait être interrompu temporairement pour une opération effectuée par un module unitaire sans quasiment altérer la campagne dont la durée est très souvent longue, de l'ordre de quelques jours à quelques semaines.

L'invention a pour **objectif** de remédier au marquage systématique des "images" de toutes les cartes concernées par une campagne dans la base de données liée au serveur et plus précisément de diminuer le nombre de marquages relatifs aux cartes concernées par la campagne afin de libérer le serveur pour d'autres tâches et de minimiser le temps de blocage dû à la campagne des cartes.

Cet objectif repose sur le constat que le nombre de requêtes d'accès formulées pendant la campagne par des modules unitaires soit à la demande de l'opérateur qui gère les cartes, soit à la demande des usagers possédant les cartes est statistiquement très faible comparativement au nombre très élevé de cartes visées par la campagne.

Pour atteindre cet objectif, un procédé pour interdire des opérations unitaires de téléchargement de données depuis un moyen serveur dans des objets communicants portables à travers un réseau de radiocommunications pendant une campagne d'opérations communes de téléchargement de données depuis le moyen serveur dans les objets communicants,
le téléchargement de données relatif à un objet communicant comprenant un pré-traitement de données dans le moyen serveur en au moins un message de données destiné à l'objet communicant, une émission du message de données depuis le moyen serveur vers l'objet communicant et une réception par le moyen serveur d'un acquittement transmis par l'objet communicant, et un post-traitement de données dans le moyen serveur en dépendance de l'acquittement,
est caractérisé en ce que l'accès à un objet communicant visé par la campagne est autorisé pour une opération unitaire pendant que le moyen serveur gère le pré-traitement de données pour l'objet communicant pendant la campagne, et est interdit pour une opération unitaire relative à un objet communicant visé par la campagne dès que l'accès est requis lorsque le moyen serveur gère pendant la campagne l'émission de message de données vers l'objet communicant, la réception d'acquittement transmis par l'objet communicant et le post-traitement de données relatifs à l'objet communicant.

Les opérations unitaires interdites selon le procédé de l'invention s'entendent de toute opération unitaire, y compris de tout ensemble d'opérations unitaires constituant une campagne, venant en concurrence avec ladite campagne.

Grâce à l'invention, le serveur est libéré pour d'autres tâches en dépendance de la différence entre le nombre de cartes visées par la campagne et le nombre de cartes pour chacune desquelles au moins une requête d'accès a été formulée par un module unitaire, ou peu probablement par un module de campagne, pendant la campagne. La durée de campagne est ainsi réduite.

Selon une autre caractéristique du procédé de l'invention, lorsque le pré-traitement de données pour l'objet communicant comporte un formatage des données en des messages, les données sont reformatées après que l'accès à l'objet communicant visé par la campagne ait été requis pour une opération unitaire et l'opération unitaire ait été exécutée pendant ou après le formatage de tous les messages destinés à l'objet communicant pendant le pré-traitement de données de la campagne.

L'invention vise en outre à remédier à l'organisation des traitements élémentaires dans le serveur de téléchargement selon la technique antérieure pendant une campagne.

En effet, la durée d'une campagne selon la technique antérieure illustrée à la figure 1 dépend du nombre de messages de données formatées et donc du nombre de messages courts à transmettre et du nombre de cartes à puce ciblées pendant la campagne. La durée de la campagne offerte à travers une passerelle de communication, telle qu'un serveur de messages courts, dépend ainsi de la durée des trois traitements élémentaires successifs PRET, E/R et POST ainsi que de l'enchaînement des blocs à trois traitements élémentaires montrés à la figure 1 pour le téléchargement dans chaque carte.

Les téléchargements ont pour inconvénient de nécessiter une durée de campagne longue puisqu'elle dépend de plusieurs ensembles successifs à trois traitements élémentaires pour chaque carte visée. Dans ces conditions, le serveur de messages courts est occupé très longtemps et est peu disponible pour transmettre et recevoir des messages courts échangés entre les usagers et des messages courts pour d'autres campagnes.

En outre, le serveur de téléchargement doit gérer à la fois plusieurs types de traitements ce qui ralentit sa vitesse d'exécution et par suite augmente la durée de la campagne. Pour un débit prédéterminé de messages courts offerts par le serveur de messages courts au serveur de téléchargement, et à performances d'exécution égales des serveurs, le serveur de téléchargement ne pourra pas atteindre ce débit à cause de la corrélation du traitement intermédiaire d'émission/réception E/R avec le pré-traitement PRE et le post-traitement POST pour chaque message de données pendant la campagne.

La durée d'une campagne de téléchargement étant très grande, un opérateur cherche toujours à réduire la durée pendant laquelle une carte est verrouillée ("locked") pendant la campagne afin de ne pas interdire trop longtemps des accès à la carte pour des opérations unitaires déclenchées notamment par l'usager de la carte. Par conséquent le nombre de campagnes et leurs durées sont des éléments fondamentaux imposés au fonctionnement du serveur de téléchargement OTA.

Pour s'affranchir des inconvénients ci-dessus, l'invention propose de charger un plus grand nombre de cartes pour une durée de campagne donnée et d'utiliser plus efficacement le serveur de téléchargement pour les différents traitements élémentaires. A cette fin, le procédé de l'invention est caractérisé en ce que les pré-traitements de données et post-traitements de données relatifs aux objets communicants sont respectivement exécutés avant et après les émissions de message et les réceptions d'acquittement relatifs aux objets communicants, et le moyen serveur ne communique avec le réseau de radiocommunications que pendant les émissions de message de données et les réceptions d'acquittement.

En d'autres termes, le moyen serveur ne communique pas avec le réseau de radiocommunications pendant les pré-traitements de données et post-traitements de données relatifs aux objets communicants .

En pratique les messages de données et les acquittements peuvent être respectivement émis et reçus par le moyen serveur à travers une passerelle de communication, comme par exemple un serveur de messages courts, pendant au moins une plage horaire prédéterminée et avec un débit maximum dépendant du fonctionnement de la passerelle de communication.

Selon l'invention, tous les pré-traitements de données élémentaires sont exécutés pendant une phase de pré-traitement sans que le moyen serveur ne communique avec le réseau de radiocommunications. Grâce au rassemblement des pré-traitements, le moyen serveur utilise au mieux ses ressources puisqu'il est contraint à exécuter un même type de traitement élémentaire. Il en est de même au regard des post-traitements de données qui sont exécutés ensemble pendant une phase de post-traitement au cours de laquelle le moyen serveur ne communique pas avec le réseau de radiocommunications. Pendant le post-traitement, la base de données incluse dans le moyen serveur et utilisée pour enregistrer notamment des images actualisées des contenus des objets communicants, telles que des cartes à puce, a ses ressources beaucoup mieux gérées que lorsque le moyen serveur devait exécuter des post-traitements et des pré-traitements simultanément avec des émissions/réceptions de données.

Avantageusement, cette rupture technologique par rapport à la technique antérieure permet aux ressources du moyen serveur de se consacrer entièrement à l'émission et la réception des données lorsque le moyen serveur communique avec le réseau de radiocommunications par exemple à travers une passerelle de communication telle qu'un serveur de messages courts. Les plages horaires imposées par le fonctionnement de la passerelle de communication sont uniquement occupées par de la communication dans le moyen serveur, c'est-à dire par l'émission des messages de données formatées et la réception des acquittements. Pour une plage horaire donnée, le nombre de messages de données transmis selon le procédé de téléchargement de l'invention est beaucoup plus élevé, et la vitesse du fonctionnement du moyen serveur est ainsi mieux adaptée au débit offert par le serveur de messages courts pendant chaque plage horaire. Réciproquement, pour un nombre donné de messages de données, les ressources nécessaires du moyen serveur sont diminuées par le procédé de téléchargement de l'invention. Par conséquent à durée de campagne égale et à ressources égales du moyen serveur, l'invention télécharge plus de cartes que selon la technique antérieure. L'opérateur du réseau de radiocommunications réduit en outre le temps passé à surveiller la progression de la campagne.

La préparation à l'avance des données pendant la phase de pré-traitement offre la possibilité d'optimiser les pré-traitements de données. Selon une caractéristique avantageuse de l'invention, les pré-traitements de données relatifs à des objets communicants ayant au moins une caractéristique commune ont une partie commune exécutée une seule fois avant les émissions de message de données et les réceptions d'acquittement. Cette caractéristique optimise l'utilisation des ressources du moyen serveur et par conséquent la durée des pré-traitements de données.

Dans le même souci d'optimisation des ressources du moyen serveur, la durée de la phase de post-traitement peut être diminuée grâce à la recherche de caractéristiques communes des objets communicants. Dans ce cas, les post-traitements de données relatifs à des objets communicants ayant au moins une caractéristique commune ont une partie commune exécutée une seule fois après les émissions de message de données et les réceptions d'acquittement.

Ainsi la décorrélation des trois traitements élémentaires selon l'invention et par conséquent le rassemblement des trois types de traitements élémentaires en trois phases distinctes, ainsi que la factorisation de certaines opérations par lots de cartes pendant les phases de pré-traitement et post-traitement optimisent la vitesse de traitement du moyen serveur et favorisent une augmentation du débit des données à transmettre pendant une campagne de durée prédéterminée. Inversement, pour une durée de campagne donnée, les ressources demandées au moyen serveur selon l'invention sont inférieures à celles nécessaires selon la technique antérieure.

La présente invention est relative également à un serveur comprenant au moins un module unitaire et un module de campagne pour interdire des opérations unitaires de téléchargement de données requis par le module unitaire dans des objets communicants portables à travers un réseau de radiocommunications pendant une campagne gérée par le module de campagne et relatives à des opérations communes de téléchargement de données dans les objets communicants. Le serveur est caractérisé en ce que le module unitaire est autorisé à accéder à un objet communicant visé par la campagne pour une opération unitaire pendant que le module de campagne gère le pré-traitement de données pour l'objet communicant pendant la campagne, et est interdit d'accès pour une opération unitaire relative à un objet communicant visé par la campagne dès qu'il requiert l'accès lorsque le module de campagne gère pendant la campagne l'émission de message de données vers l'objet communicant, la réception d'acquittement transmis par l'objet communicant et le post-traitement de données relatifs à l'objet communicant.

Selon une caractéristique du serveur, le module de campagne met un indicateur d'accès associé à un objet communicant à un premier état dès qu'une base de données liée au serveur détecte une requête d'accès établie par le module unitaire pour accéder à l'objet communicant entre le début de l'émission de tout message de données pendant la campagne vers l'objet communicant et la fin du post-traitement de données pendant la campagne en dépendance de l'acquittement reçu transmis par l'objet communicant en réponse au message de données, le module de campagne met l'indicateur d'accès associé à l'objet communicant à un deuxième état à la fin dudit post-traitement de données de la campagne pour ledit objet communicant, et le module unitaire requérant l'accès à l'objet communicant n'est autorisé à accéder à l'objet communicant pendant le pré-traitement de données pendant la campagne qu'après que la base de données ait lu l'indicateur d'accès associé à l'objet communicant au deuxième état.

Les performances de la base de données liée au serveur sont accrues à cause de la diminution du nombre de requêtes pour changer des indicateurs d'accès à l'état d'interdiction d'accès pendant la campagne. Cette diminution du nombre de requêtes de changement d'état d'indicateur d'accès est liée au fait que le changement d'indicateur d'accès pour chaque carte n'intervient qu'à la suite d'une première requête d'accès formulée par un module pendant la campagne et non systématiquement au début de la campagne.

Le temps pendant lequel une carte est interdite d'accès notamment pour des modules unitaires pendant la campagne est ainsi considérablement réduit ce qui rend le serveur plus disponible pour des opérations autres que celles effectuées pendant la campagne.

Pour remédier à l'organisation temporelle par blocs à trois traitements élémentaires dans le serveur de téléchargement selon la technique antérieure pendant une campagne, le module de campagne comprend un module de pré-traitement pour pré-traiter des données en des messages de données respectivement destinés aux objets communicants pendant que le serveur ne communique pas avec le réseau de radiocommunications, un module d'émission-réception pour émettre les messages de données vers les objets communicants et recevoir des acquittements transmis par les objets communicants à travers le réseau de radiocommunications en réponse aux messages de données, et un module de post-traitement pour post-traiter des données dans le moyen serveur en fonction des acquittements reçus pendant que le serveur ne communique pas avec le réseau de radiocommunications.

L'invention concerne encore un programme d'ordinateur sur un support d'information, comportant des instructions de programmes adaptées à la mise en oeuvre du procédé de l'invention pour interdire des opérations unitaires de téléchargement de données depuis un moyen serveur dans des objets communicants portables à travers un réseau de radiocommunications pendant une campagne d'opérations communes de téléchargement de données depuis le moyen serveur dans les objets communicants, lorsque le programme est chargé et exécuté dans le moyen serveur. Selon l'invention, le programme comprend des instructions autorisant à accéder à un objet communicant visé par la campagne pour une opération unitaire pendant que des instructions de campagne exécutent le pré-traitement de données pour l'objet communicant pendant la campagne, et des instructions interdisant l'accès à un objet communicant visé par la campagne pour une opération unitaire dès que l'accès est requis lorsque les instructions de campagne exécutent pendant la campagne l'émission de message de données vers l'objet communicant, la réception d'acquittement transmis par l'objet communicant et le post-traitement de données relatifs à l'objet communicant.

Dans le but encore de remédier à l'organisation des traitements élémentaires dans le serveur de téléchargement selon la technique antérieure pendant une campagne, le programme d'ordinateur peut comprendre des instructions de pré-traitement pour pré-traiter des données en des messages de données formatées respectivement destinés aux objets communicants pendant que le moyen serveur ne communique pas avec le réseau de radiocommunications, des instructions d'émission-réception pour émettre les messages de données vers les objets communicants et recevoir des acquittements transmis par les objets communicants à travers le réseau de radiocommunications en réponse aux messages de données, et des instructions de post-traitement pour post-traiter des données dans le moyen serveur en fonction des acquittements reçus pendant que le moyen serveur ne communique pas avec le réseau de radiocommunications.

D'autres caractéristiques et avantages de la présente invention apparaîtront plus clairement à la lecture de la description suivante de plusieurs réalisations préférées de l'invention, données à titre d'exemples non limitatifs, en référence aux **dessins** annexés correspondants dans lesquels :
- la figure 1 est un diagramme temporel d'étapes élémentaires d'un procédé de téléchargement de données dans des cartes à puce selon la technique antérieure, déjà commenté ;
- la figure 2 est un bloc-diagramme schématique de moyens de télécommunications reliant des terminaux mobiles incluant des cartes à puce d'un opérateur et un serveur d'administration de carte géré par l'opérateur, pour la mise en oeuvre du procédé d'interdiction d'opérations unitaires selon l'invention ;
- la figure 3 est un diagramme temporel des étapes principales d'un téléchargement de données selon l'invention ;
- la figure 4 montre des champs principaux d'un message transmis ou reçu selon une deuxième réalisation de l'invention ; et
- la figure 5 est un algorithme d'étapes du procédé d'interdiction d'opérations unitaires selon l'invention.

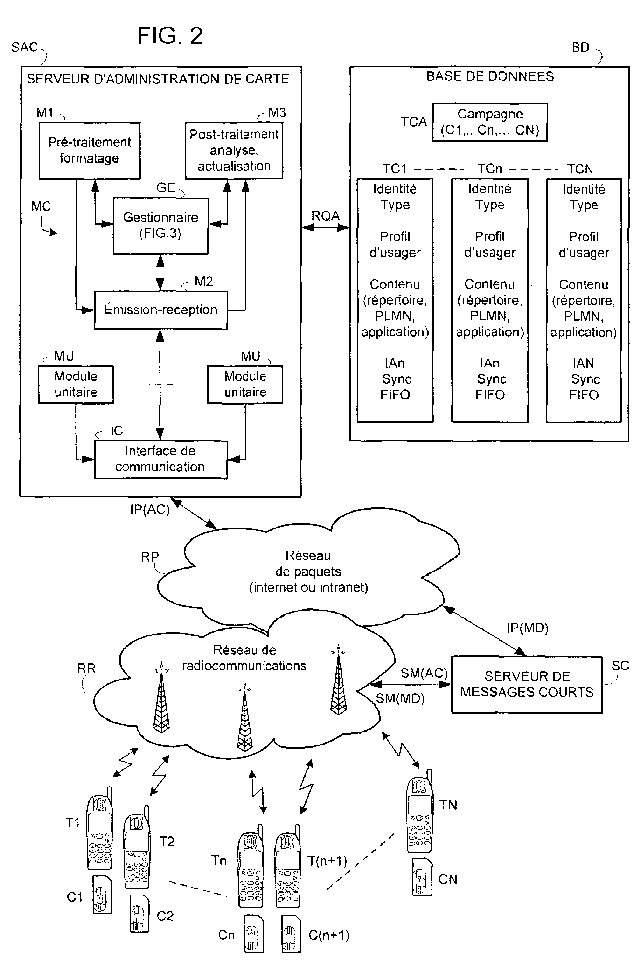

Dans la figure 2 sont représentés des moyens principaux pour télécharger des données dans des cartes à puce d'usager amovibles C1 à CN qui équipent respectivement des terminaux radio mobiles T1 à TN rattachés à un réseau de radiocommunications cellulaire numérique RR. La carte à puce Cn dans le terminal mobile Tn, avec l'indice n tel que 1 ≤n ≤ N, est du type UICC (Universal Integrated Circuit(s) Card). La carte à puce est par exemple une carte SIM (Subscriber Identity Module) lorsque le réseau RR est du type GSM, ou un module d'identité USIM lorsque le réseau RR est à accès multiple à répartition par codes CDMA (Coded Division Multiple Access) de la troisième génération (3GPP) du type UMTS (Universal Mobile Telecommunications System).

Un serveur d'administration de carte SAC selon l'invention est géré par l'opérateur du réseau RR et constitue une plateforme OTA (Over The Air). Selon la réalisation illustrée à la figure 2 à laquelle on se référera ci-après, le serveur SAC transmet des messages de données formatées MD vers les terminaux mobiles T1 à TN et reçoit des messages d'acquittement AC transmis par les terminaux mobiles T1 à TN, à travers une passerelle de communication telle qu'un serveur de messages courts SC (Short Message Service Centre). Le serveur SC comporte une passerelle d'accès pour communiquer avec le serveur SAC à travers un réseau de paquets RP à haut débit, tel que l'internet, ou tel qu'un réseau intranet propre à l'opérateur du réseau RR. Une autre passerelle d'accès du serveur de messages courts SC communique avec au moins un commutateur du service mobile, à travers bien souvent un réseau d'accès tel qu'un réseau de paquets de type X.25 ou un réseau RNIS ou ATM. Les messages de données MD sont transportés dans des paquets IP (Internet Protocol) par le serveur SAC et sont formatés dans le serveur SC en des messages courts SM transmis vers les terminaux mobiles ; inversement, des messages d'acquittement AC sont transmis dans des messages courts SM par un terminal mobile Tn à destination du serveur SAC et sont acheminés par le serveur SC sous la forme de paquets IP vers le serveur SAC.

En variante, le serveur de messages courts SC est relié directement ou est incorporé à un commutateur du service mobile dans le réseau RR.

L'invention n'est pas limitée aux messages courts SM en tant que vecteurs supportant des données à transmettre. Le serveur SC peut être un serveur de messages MMS (Multimedia Messaging Service) pour des fichiers et des applications multimédias à télécharger depuis le serveur SAC.

Selon une autre réalisation, le serveur de messages courts est remplacé par un réseau d'accès du type à réseau à commutation par paquets avec gestion de la mobilité et accès par voie radio GPRS (General Packet Radio Service), si le réseau de radiocommunications RR est du type GSM. Un noeud de service SGSN (Serving GPRS Support Node) du réseau GPRS est relié à au moins un contrôleur de station de base du réseau RR. Un noeud-passerelle GGSN (Gateway GPRS Support Node) du réseau GPRS est relié au réseau de paquets RP desservant le serveur SAC.

En variante, si le réseau de radiocommunications RR est du type UMTS, ou du type GSM adossé à un réseau GPRS, les messages MD et AC sont échangés entre un terminal mobile Tn et la carte associée Cn selon le protocole BIP (Bearer Independent Protocol) ou le protocole J2ME (Java 2 Mobile Edition).

Comme montré à la figure 2, le serveur d'administration de carte SAC est lié à une **base de données** BD incluant divers paramètres et caractéristiques des cartes gérées par l'opérateur de réseau de radiocommunications RR.

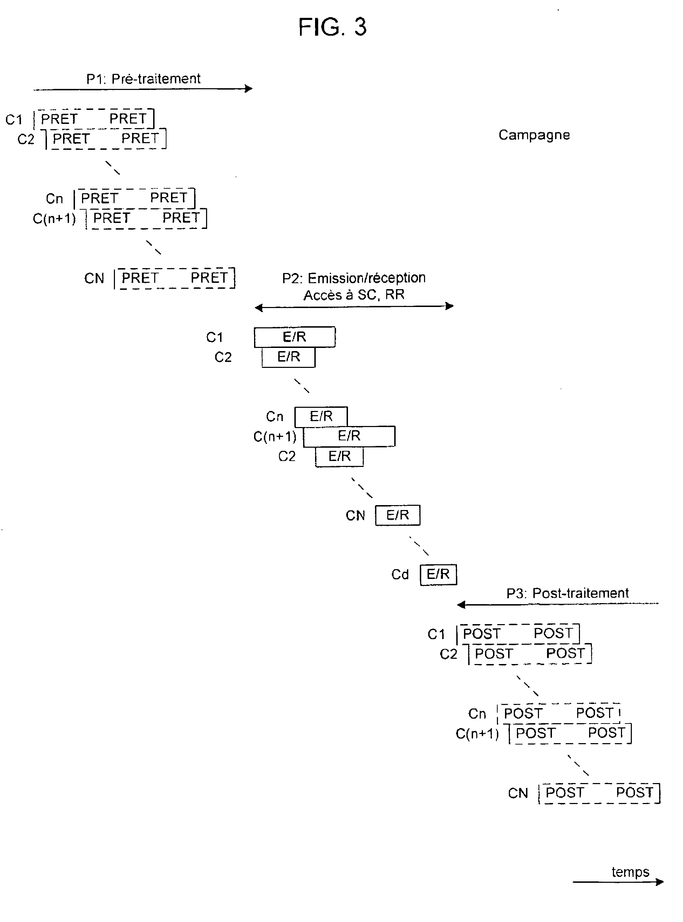

La base contient classiquement un **contrôleur** CR qui contrôle, valide et exécute des requêtes appliquées par le serveur SAC et établit des réponses à ces requêtes pour les appliquer au serveur SAC. En particulier le contrôleur CR gère des requêtes d'accès RQA pour la mise en oeuvre du procédé de l'invention, comme on le verra ci-après en référence à la figure 3.

L'invention concerne ainsi non seulement un procédé mis en oeuvre dans un moyen serveur tel que le serveur d'administration SAC et la base de données BD pour interdire des opérations unitaires de téléchargement de données dans des objets communicants portables tels que des cartes à puce ou des terminaux mobiles, mais également une implémentation d'étapes du procédé déterminées par les instructions d'un **programme** d'interdiction d'opérations unitaires incorporées dans le moyen serveur SAC - BD. Le procédé selon l'invention est alors mis en oeuvre lorsque ce programme est chargé dans un ordinateur, tel que le moyen serveur, dont le fonctionnement est alors commandé par l'exécution du programme. L'invention s'applique ainsi à un programme d'ordinateur enregistré sur ou dans n'importe quel support ou moyen ou circuit de stockage d'informations, basé sur n'importe quel langage de programmation, par exemple un langage de haut niveau comme Java, et compilé en des codes exécutables qui sont adaptés à mettre en oeuvre le procédé selon l'invention dans l'ordinateur tel que le moyen serveur SAC - BD.

Chaque carte à puce Cn est associée à une **table** TCn dans la base de données BD. La table TCn comprend notamment des caractéristiques initiales qui sont liées à l'identité de la carte Cn et au type de la carte et qui sont enregistrées dans la base de données BD dès la mise en service de la carte. Ces caractéristiques initiales sont notamment un numéro de série de la carte, l'identité internationale IMSI (International Mobile Subscriber Identity) de l'usager de la carte, et le numéro téléphonique de l'usager mobile MSISDN (Mobile Station ISDN Number). Le type de la carte Cn est défini notamment par un identificateur du type du processeur inclus dans la carte, l'identificateur du fabricant de la carte, du nombre de bits par mot traité par le processeur, des caractéristiques du système d'exploitation et de la machine virtuelle implémentés dans la carte, etc.

D'autres caractéristiques propres à l'utilisation de la carte et notamment du terminal de l'usager Tn peuvent être également enregistrées dans la table TCn associée à la carte Cn lors de la mise en service de la carte, et peuvent être modifiées lors de l'utilisation de la carte en activant une opération unitaire. Ces autres caractéristiques concernent notamment le profil d'abonnement de l'usager de la carte Cn, des données pouvant être modifiées par l'usager ou par l'opérateur gérant la carte telles qu'un répertoire de numéros téléphoniques et d'adresses e-mail, et par exemple un fichier d'identificateurs de réseaux de radiocommunications préférés PPLMN (Preferred Public Land Mobile Network). Ces réseaux identifiés dans le fichier PPLMN sont gérés par des opérateurs avec lesquels l'opérateur du réseau RR auquel est rattaché la carte Cn a passé des accords pour que l'usager de la carte Cn communique à travers ces réseaux lorsque l'usager est en déplacement sur des territoires couverts par ces réseaux.

La table TCn contient également un ou plusieurs identificateurs d'applications qui ont été chargées lors de la mise en service de la carte à puce Cn et/ou ont été téléchargées ultérieurement à sa mise en service. Par exemple une application consiste à modifier le fichier d'identificateurs de réseaux préférés PPLMN. Selon un autre exemple, l'application consiste à effacer ou télécharger une application dans la carte Cn par exemple pour faciliter la gestion du répertoire des numéros téléphoniques dans la carte Cn en permettant à l'usager, chaque fois qu'il enregistre un nouveau numéro téléphonique dans la carte, de sauvegarder tout son répertoire dans un serveur spécifique géré par l'opérateur afin que l'usager puisse retrouver son répertoire sauvegardé lorsqu'il perd la carte Cn ou lorsqu'il change de carte. Une autre application peut servir à modifier des paramètres dans une application déjà téléchargée dans la carte Cn ; par exemple les paramètres à modifier sont une actualisation de tarifs de rechargement et d'unités de communication lorsque l'usager est abonné à un compte prépayé.

La table TCn comporte encore des paramètres propres à l'administration de la carte Cn. Ces paramètres d'administration sont notamment un indicateur d'accès IAn et un mot de synchronisation. L'indicateur d'accès IAn est à un premier état "1" indiquant que la carte Cn est occupée par au moins un traitement élémentaire d'opération unitaire prédéterminé selon l'invention et pouvant être réalisé au cours d'une campagne, et à un deuxième état "0" indiquant que la carte Cn est disponible pour au moins un traitement élémentaire. Le mot de synchronisation, tel qu'une date, est produit par un générateur de synchronisation, dit compteur de synchronisation, transmis dans un message de données formatées MD par le serveur SAC à destination de la carte Cn.

La base de données BD contient également une ou plusieurs tables de campagne TCA respectivement attribuées à des campagnes. Chaque table de campagne inclut une liste des numéros téléphoniques MSISDN et des adresses des tables associées aux cartes visées par la campagne, qui seront supposées être les N cartes C1 à CN ci-après.

La base de données BD peut être incorporée au serveur d'administration de carte SAC, ou être indépendante sous la forme d'un serveur de gestion de base de données qui est relié au serveur SAC par un réseau de paquets tel que le réseau RP, c'est-à-dire via l'internet ou via un réseau intranet propre à l'opérateur du réseau RR.

Comme montré en détail à la figure 2, le **serveur d'administration de carte** SAC comprend en relation avec l'invention plusieurs modules logiciels unitaires de téléchargement de données MU, au moins un module logiciel de campagne MC, et une interface de communication IC.

Un module unitaire MU ne traite à la fois, comme selon la technique antérieure, qu'une opération unitaire composée de trois traitements élémentaires pour télécharger par l'intermédiaire d'un message court des données prédéterminées dans une carte à puce d'usager Cn. Lorsque l'opérateur qui gère les cartes à puce C1 à CN requiert l'opération unitaire auprès du module unitaire MU par l'intermédiaire d'une station de travail reliée au serveur SAC, ou lorsque l'usager de la carte Cn requiert l'opération unitaire auprès du module unitaire MU par l'intermédiaire du clavier du terminal Tn et d'un message court, le module unitaire MU établit une requête d'accès RQA et l'applique au contrôleur CR dans la base de données BD.

Pour une campagne demandée par l'opérateur gérant des cartes C1 à CN, notamment les numéros téléphoniques MSISDN des cartes à puce en association aux adresses des tables TC1 à TCN, les données à télécharger dans les cartes et les plages horaires de la campagne sont préalablement fournis par l'opérateur et enregistrés dans une table de campagne TCA comportant l'adresse d'un module de campagne MC disponible. Le module de campagne MC traite des opérations unitaires similaires respectivement pour les cartes à puce C1 à CN visées par la campagne.

Comme montré en détail également à la figure 2, le module de campagne MC comprend trois modules logiciels M1, M2 et M3 pour exécuter respectivement trois phases principales P1, P2 et P3 du téléchargement de données selon l'invention, sous la commande d'un module gestionnaire GE qui gère les diverses opérations au cours du téléchargement, selon le diagramme temporel montré à la figure 3 et décrit ci-après. De même, chaque module unitaire MU comprend trois modules logiciels analogues à ceux M1, M2 et M3 dans le module de campagne MC pour exécuter respectivement les traitements élémentaires PRET, E/R et POST d'une opération unitaire pour une carte et un module gestionnaire analogue à celui GE dans le module de campagne MC pour gérer successivement les trois traitements élémentaires.

On suppose que la **campagne** à lancer par l'opérateur du réseau de radiocommunications RR gérant le serveur de messages courts SC met à disposition de celle-ci une plage horaire prédéterminée et un débit prédéterminé de messages courts SM dans le serveur de messages courts SC. La plage horaire prédéterminée est par exemple une plage journalière de 9 h à 19 h pendant cinq jours de la semaine afin de recevoir le plus grand nombre de messages d'acquittement par les usagers qui sont disponibles pendant cette plage horaire, comparativement à une plage horaire pendant la nuit, En variante, la plage horaire est 24 heures sur 24 pendant une période prédéterminée.

Comme montré à la **figure 3**, la campagne est divisée en trois phases P1, P2 et P3 dont seule la phase intermédiaire P2 dite d'émission/réception se déroule pendant la plage horaire prédéterminée afin de n'utiliser celle-ci que pour émettre et recevoir des messages.

Par conséquent, selon l'invention, les phases P1 et P3, dites phase de pré-traitement de données et phase de post-traitement de données, sont respectivement exécutées avant et après les émissions de messages de données MD et les réceptions de messages d'acquittement AC pour toutes les cartes à puce C1 à CN auxquelles des messages doivent être transmis pendant la plage horaire prédéterminée. Le serveur d'administration de carte SAC ne communique donc pas avec le serveur de messages courts SC pendant les phases P1 et P3 et n'a donc pas accès au réseau de radiocommunications RR pendant celles-ci.

A titre d'exemple, le nombre N de cartes à puce à atteindre pendant une campagne peut être de plusieurs centaines de milliers à quelques millions Le nombre de messages courts à transmettre à une carte peut atteindre quelques dizaines ce qui correspond à plusieurs millions ou plusieurs dizaines de millions de messages courts à transmettre pendant la campagne. Le débit prédéterminé de messages courts SM peut varier environ de dix à environ plus de mille messages courts par seconde, un message court incluant au plus 140 octets.

Dans le module de campagne MC, le gestionnaire GE initialise la campagne en commençant par la phase de **pré-traitement** P1 et active le module de pré-traitement M1. Le pré-traitement consiste essentiellement à formater les données à transmettre dans des messages de données MD. L'état d'aucun indicateur d'accès IA1 à IAN n'est modifié à cause du commencement de la campagne.

Comme montré à la figure 4, un message de données MD destiné à la carte à puce Cn est composé de deux parties : un en-tête ES qui est propre à la carte Cn et un champ CHD de données qui peuvent être au moins partiellement communes à plusieurs cartes à puce visées par la campagne.

L'en-tête ES comporte typiquement quelques octets et comprend notamment des paramètres de sécurité propres à la carte Cn, tels que des signatures par exemple d'authentification et/ou des éléments de cryptage, le suffixe du numéro téléphonique MSISDN correspondant à la carte Cn, et un mot de synchronisation. Toutes ces données sont lues dans la table TCn associée à la carte Cn dans la base de données BD pour les inclure dans l'en-tête ES du message de données.

A la suite de la génération de l'en-tête ES, des données à télécharger dans la carte Cn, dont la longueur est variable, sont bien souvent fragmentées en des champs de données CHD. Chaque champ de données CHD a une longueur variable indiquée dans l'en-tête ES. Les champs de données comprennent des données propres à la campagne, telles que des données pour la mise à jour d'un répertoire ou d'une liste d'identificateurs de réseaux de radiocommunications préférés, ou telles que des instructions d'une application à télécharger.

L'en-tête généré ES et chaque champ de données CHD sont concaténés en un message de données MD à émettre qui est éventuellement crypté en fonction d'une clé personnelle à la carte Cn. Le message de données MD est empaqueté dans un message IP dont l'en-tête EIP contient l'adresse du serveur SAC en tant que source, l'adresse du serveur SC en tant que destinataire, la longueur du paquet IP, etc. Le module M1 formate les données d'abord pour la première carte C1, puis successivement pour les cartes C2 à CN. Les paquets IP(MD) ainsi construits sont stockés dans une mémoire tampon du serveur SAC en attente de leurs émissions lors de la phase suivante P2.

Certains pré-traitements de données PRET relatifs à des cartes ayant au moins une caractéristique commune ont de préférence une partie commune exécutée une seule fois pendant la phase P1 précédant les émissions de message pendant la phase P2. Ainsi pendant la phase P1, le module gestionnaire GE trie les cartes C1 à CN visées par la campagne en fonction de caractéristiques communes qu'il peut lire dans les tables TC1 à TCN. Ces caractéristiques communes peuvent dépendre notamment du type de la carte, et donc de l'identificateur du fabricant de la carte, du type d'usager et donc notamment du profil d'usager.

Par exemple, lorsque le module M1 doit établir une commande à transmettre dans le champ de données CHD de messages MD, la commande est établie une seule fois pour toutes les cartes provenant d'un même constructeur et ayant le même processeur. Un tel pré-traitement est validé ou invalidé pour l'ensemble des cartes concernées. Comparativement aux techniques antérieures, le regroupement de pré-traitement ou de parties de pré-traitement identiques en un pré-traitement commun diminue avantageusement le temps de fonctionnement du serveur SAC et le rend ainsi disponible pour d'autres tâches.

Selon un autre exemple, un formatage de message déterminé est commun à tous les messages MD dont la longueur du champ de données est identique et dont les caractéristiques de sécurité introduites dans l'en-tête et requises pour ce formatage satisfont des conditions prédéterminées.

Selon encore un autre exemple, lorsque la campagne vise le changement d'une partie de contenu dans les cartes, la base de données BD prépare des données à transmettre pour les cartes visées par la campagne selon une opération identique pour toutes les cartes présentant un même profil d'abonnement ; ce pré-traitement n'est exécuté qu'une fois par profil pour toutes les cartes présentant des caractéristiques communes de profil de manière à réutiliser le résultat obtenu avec la première carte pour les cartes suivantes.

La phase **d'émission/réception** P2 est exécutée par le module M2 dans le module de campagne MC à travers l'interface de communication IC pendant toute la plage horaire imposée par l'opérateur gérant le serveur de messages courts SC. Dans la figure 3, un bloc d'émission/réception E/R s'étend depuis le début de l'émission d'un message de données formatées IP(MD) par le serveur SAC jusqu'à la fin de la réception d'un acquittement transmis par la carte à puce Cn dans le serveur SAC en réponse au message IP(MD).

Sous la commande du gestionnaire GE, le module d'émission/réception M2 transmet les messages IP(MD) préparés pendant la phase de pré-traitement précédente P1 au serveur de messages courts SC, en commençant par émettre les premiers messages relatifs aux premières cartes, puis à transmettre en priorité les messages relatifs aux cartes pour lesquelles les messages d'acquittement AC relatifs à des messages de données transmis précédemment ont été reçus par le module M2. Par exemple, comme montré à la figure 3, les premiers messages relatifs aux cartes C1 à C(n+1) sont transmis, puis un deuxième message relatif à la deuxième carte C2 est transmis à la suite de la réception du premier message d'acquittement relatif à la carte C2.

La phase d'émission/réception P2 peut être terminée lorsqu'un message d'acquittement AC correspondant au dernier message de données MD préparé pendant la phase P1 est reçu, ou naturellement lorsque la durée de la phase P2 attribuée par l'opérateur expire. Comme indiqué dans la figure 3, ce dernier message peut être relatif à une carte quelconque Cd de la campagne visé. En pratique, la durée entre le début de l'émission E d'un message de données MD et la fin de la réception R d'un message d'acquittement AC, illustrée par la longueur d'un bloc E/R dans la figure 3, est variable en fonction des disponibilités des réseaux RP et RR et du serveur SC traversés par les messages et surtout en fonction de l'état du terminal mobile contenant la carte à puce à laquelle le message de données est destiné. En effet, le terminal mobile peut être en veille, ou occupé, ou éteint, ou hors couverture de réseau. La durée d'une phase élémentaire E/R est en pratique limitée, par exemple à quelques dizaines de minutes, et le module M2 réitère plusieurs fois l'émission d'un message de données MD, par exemple deux ou trois fois, pour lequel il n'a pas reçu un message d'acquittement AC. Chaque fois que le module M2 n'a pas reçu un message d'acquittement en réponse à un message de données, le module M2 recommence l'émission des messages de données destinés à la carte concernée à partir du premier message. Après plusieurs tentatives d'émission d'un message de données plus ou moins espacées dans le temps vers une carte Cn qui ont échoué, le module M2 abandonne définitivement la transmission des messages de données MD pour la carte concernée Cn.

Les paquets IP(AC) transmis par le serveur de messages courts messages SC sont désempaquetés en des messages d'acquittement éventuellement cryptés AC par l'interface de communication IC dans le module de campagne MC. Les messages d'acquittement éventuellement cryptés AC sont stockés au fur et à mesure de leur réception dans une mémoire tampon du serveur SAC, dans l'attente du post-traitement P3 par le module M3. Chaque message d'acquittement AC présente un format similaire à celui montré à la figure 4 et est composé d'un en-tête ES qui est propre à la carte associée et relatif à la sécurité et la synchronisation, et d'un champ de données CHD.

Après la réception du dernier message d'acquittement AC, ou au plus tard à l'expiration de la plage horaire attribuée au serveur SAC, la phase d'émission/réception P2 est considérée comme terminée et est suivie de la phase de post-traitement P3.

Pendant la phase de **post-traitement** P3, le module de post-traitement M3 dans le module de campagne MC lit en mémoire tampon, éventuellement décrypte et analyse les messages d'acquittement AC qui ont été délivrés par les cartes à puce C1 à CN à travers les terminaux mobiles T1 à TN et le serveur de messages courts SC en réponse respectivement aux messages de données formatées MD. Par exemple un message d'acquittement AC acquitte le téléchargement de données ou d'instructions d'une application dans la carte associée, ou acquitte l'exécution d'une commande qui a été réalisée avec succès ou qui a échoué dans la carte associée.

Le module M3 actualise et analyse les mots de synchronisation (Sync) ainsi que les "images" des contenus des cartes C1 à CN dans les tables TC1 à TCN de la base de données BD, en réponse aux messages d'acquittement relatifs aux cartes. Le contenu de la carte Cn dans la table TCn est actualisé par le module M3 lorsque tous les messages de données concernant cette actualisation ont été acquittés par des messages AC afin que le contenu dans la table TCn reflète le contenu de la carte Cn et soit ainsi l'image de ce dernier.

D'une manière similaire à la phase de pré-traitement P1, le module M3 exécute des post-traitements de données POST relatifs à des lots de cartes, chaque lot de cartes résultant d'un tri préalable des cartes et étant relatif à des cartes ayant une ou plusieurs caractéristiques communes. Par conséquent le module de post-traitement M3 exécute une seule fois une partie commune de post-traitement de données relative à des cartes à puce ayant au moins une caractéristique commune. Par exemple, toutes les cartes ayant une partie de leurs profils d'abonnement en commun ont une partie de leur contenu qui est actualisée dans leurs tables respectives TC1 à TCN après une préparation commune de l'actualisation du profil pendant la phase de pré-traitement P1.

Bien que le procédé de téléchargement ait été décrit en référence à trois phases P1, P2 et P3 complètement séparées comme montré à la figure 3, des phases de pré-traitement et post-traitement peuvent être mélangées. Par exemple lorsque plusieurs plages horaires sont ménagées pour une campagne, le serveur d'administration de carte SAC exécute la phase de post-traitement P3 relative à une analyse des messages d'acquittement AC reçus pendant la phase P2 immédiatement précédente et exécute une phase de pré-traitement P1 pour formater des données à émettre pendant une phase d'émission/réception P2 suivante.

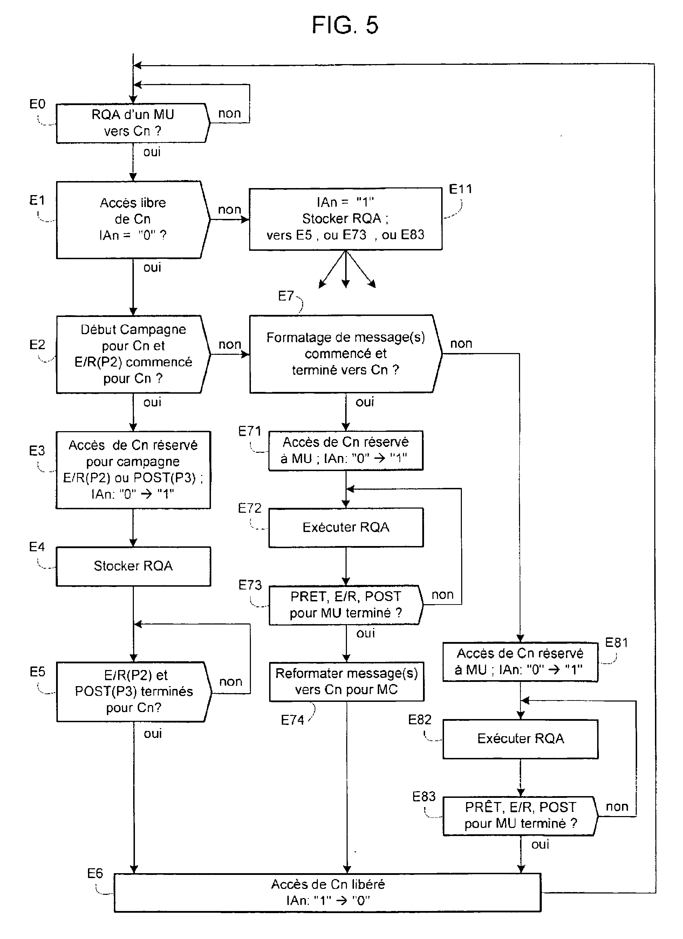

En référence à la **figure 5**, le **procédé d'interdiction d'opérations unitaires** selon l'invention comprend des étapes E0 à E83. On notera que le contrôleur CR gère en parallèle plusieurs algorithmes selon la figure 5, relativement à des cartes parmi les cartes C1 à CN visées par une campagne, en dépendance de requêtes d'accès RQA établies pendant la campagne.

Initialement à l'étape E0, on suppose qu'un module unitaire MU a établi une requête d'accès RQA afin qu'il puisse effectuer une opération unitaire pour une carte à puce Cn qui est susceptible d'être visée par la campagne.

En réponse à la requête RQA, le contrôleur CR dans la base de données BD lit l'indicateur d'accès IAn dans la table correspondante TCn, à l'étape E1. Si l'indicateur d'accès IAn est à l'état "0" et donc si l'accès à la carte Cn est libre, le contrôleur CR vérifie à l'étape E2 s'il existe une campagne ayant déjà commencée et visant la carte Cn, en interrogeant les tables de campagne TCA dans la base de données BD. Le contrôleur CR interroge alors le gestionnaire GE du module de campagne MC associé à la table TCA relative à la campagne commencé visant la carte Cn pour savoir si les émissions-réception E/R ont commencé pour la carte Cn.

Si tous les pré-traitements relatifs à la campagne ont été exécutés pour la carte Cn, le gestionnaire GE dans le module MC le signale au contrôleur CR qui met à l'état "1" l'indicateur d'accès IAn dans la table TCn, à l'étape E3. Cet état "1" de l'indicateur d'accès IAn signifie pour tout autre module unitaire ou tout autre module de campagne dans le serveur SSC que la carte Cn est réservée à la campagne en cours traitée par le module MC, comme cela est indiqué à l'étape E11. Par conséquent, l'indicateur d'accès IAn est basculé, selon l'invention, à l'état "1" pour la réservation de la carte Cn à la campagne dès qu'un premier module requiert un accès à la carte Cn, sans que ce basculement soit systématique au début de la campagne. Statistiquement, le contrôleur CR dans la bases de données BD est peu sollicité par des requêtes d'accès RQA, et l'étape E3 n'est exécutée que pour un très faible nombre de cartes comparativement au nombre très élevé N de cartes visées par la campagne.

Le module unitaire MU reçoit alors du contrôleur CR une réponse lui demandant de réitérer sa requête d'accès lorsque la campagne en cours sera terminée, comme indiqué aux étapes E5 et E6. De préférence, à la suite de la requête RQA du module unitaire MU établie à l'étape E0, le contrôleur CR stocke l'adresse du module MU dans une mémoire liée à la table TCn, à l'étape E4, afin que le contrôleur CR signale ultérieurement la fin de la campagne au module MU.

Puis le module de campagne MC poursuit la campagne en exécutant une phase d'émission/réception P2 et une phase de post-traitement P3, comme cela a été vu en référence à la figure 3. En particulier, les modules M2 et M3 dans le module de campagne MC exécutent tous les traitements élémentaires relatifs à des émissions/réceptions E/R et à des post-traitements POST pour la carte Cn pendant ladite campagne, à l'étape E5.

Au cours de la poursuite de la campagne pendant les phases P2 et P3, un autre module, par exemple un autre module unitaire, peut requérir un accès à la carte Cn en établissant une requête d'accès RQA appliquée du contrôleur CR pour exécuter une autre opération unitaire pour la carte Cn, comme cela est indiqué à l'étape E11. Le contrôleur CR constatant que l'indicateur d'accès IAn dans la table TCn est déjà à l'état "1" applique audit autre module une réponse lui demandant de réitérer sa requête d'accès lorsque la campagne en cours sera terminée, après les étapes E5 et E6.

Dès que la campagne est terminée et particulièrement dès que le dernier post-traitement POST relatif à la carte Cn est terminé, ce qui est signalé par le gestionnaire GE dans le module MC au contrôleur CR, ce dernier met à l'état "0" l'indicateur d'accès IAn de manière à libérer l'accès à la carte Cn pour l'opération unitaire requise en premier par le module unitaire MU, comme indiqué par le retour de l'étape E6 vers l'étape E0. En fait à la fin de campagne, le contrôleur CR met à l'état "0" les indicateurs d'accès IA1 à IAN de manière à libérer parmi les cartes C1 à CN visées par la campagne, les cartes pour lesquelles au moins une requête RQA a été appliquée au contrôleur CR et l'indicateur d'accès a été passé de "0" à "1" au cours de la campagne.

En revenant à l'étape E2, si des pré-traitements PRET au moins pour la carte Cn ont commencé ou sont terminés sans qu'aucun message n'ait été transmis à la carte Cn et donc sans que soit terminé la phase de pré-traitement P1, le contrôleur CR vérifie à l'étape E7 si le formatage de tous les messages destinés à la carte Cn est terminé pendant la phase de pré-traitement P1, le formatage des messages étant indivisible.

Si le formatage a déjà commencé, la requête RQA est mise en attente jusqu'à la fin du formatage par le contrôleur CR. A la fin du formatage dans ce cas, ou à réception de la requête RQA après la fin du formatage pendant la phase P1, le contrôleur CR met à l'état "1" l'indicateur d'accès IAn dans la table TCn de manière à interdire tout accès à la carte Cn au moins pendant l'émission/réception E/R et le post-traitement POST de l'opération unitaire exécutée par le module unitaire MU, à l'étape E71. Puis le contrôleur CR autorise le module unitaire MU à exécuter l'opération unitaire destinée à la carte Cn, à l'étape E72. Comme indiqué à l'étape suivante E73, dès que le module unitaire MU signale la fin de l'exécution du post-traitement POST de l'opération unitaire au contrôleur CR, ce dernier le signale à son tour au module de campagne MC afin que le module M1 dans celui-ci reformate des données à transmettre à la carte Cn pendant la phase de pré-traitement P1 de la campagne en cours, à l'étape E74. En effet, le post-traitement exécuté par le module unitaire MU à l'étape E73 modifie notamment le mot de synchronisation associé à la carte Cn, et par conséquent les mots de synchronisation à inclure dans les messages de donnés à transmettre à la carte Cn pendant la campagne doivent être modifiés en conséquence, ce qui impose un reformatage des messages.

Si à l'étape E7 le formatage des messages destinés à la carte Cn n'a pas encore commencé pendant la phase de pré-traitement P1 de la campagne, des étapes E81, E82 et E83 analogues aux étapes E71, E72 et E73 sont effectuées.

Les étapes E81 à E83 sont également effectuées lorsque le contrôleur CR constate qu'aucune campagne visant la carte Cn n'a débuté à l'étape E2.

Après l'étape E5, ou après l'étape E74 ou E83, le contrôleur CR convertit l'indicateur d'accès Cn de "1" à "0" et le procédé retourne à l'étape E0 afin de libérer l'accès de la carte Cn pour un prochain module dont l'adresse est la première dans la mémoire liée à la table Cn, ou si la mémoire est vide, pour tout autre module unitaire ou module de campagne réitérant ou non une requête d'accès.

Lorsqu'à l'étape E1 l'indicateur d'accès IAn est à l'état "1" et donc l'accès à la carte Cn est interdit à cause d'une occupation par une campagne ou une opération unitaire en cours d'exécution en relation avec la carte Cn, comme cela a déjà été évoqué, le contrôleur CR stocke l'adresse du module MU dans la mémoire liée à la table TCn, à l'étape E11, afin que le contrôleur CR signale ultérieurement la fin de la campagne ou de l'opération unitaire au module MU. L'accès de la carte Cn ne sera libéré qu'après la prochaine étape E5, ou E74, ou E83.

L'invention n'est pas limitée à un téléchargement de données dans des cartes à puce du type UICC. Une carte à puce dans laquelle des données sont à télécharger peut être également une carte incluse dans un ordinateur portable relié à un terminal mobile, ou une carte de paiement ou toute autre carte additionnelle incluse dans un terminal mobile. Selon d'autres variantes, l'invention s'applique à d'autres objets électroniques communicants portables, tels que des assistants numériques personnels communicants PDA. L'invention s'applique même à des terminaux mobiles visés par une campagne pour lesquels les données à télécharger peuvent concerner un jeu à enregistrer dans la mémoire non volatile de type EEPROM des terminaux mobiles.

## Revendications

1. Procédé pour interdire des opérations unitaires de téléchargement de données depuis un moyen serveur (SAC, BD) dans des objets communicants portables (C1 - CN) à travers un réseau de radiocommunications (RR) pendant une campagne d'opérations communes de téléchargement de données depuis le moyen serveur dans les objets communicants,
le téléchargement de données relatif à un objet communicant (Cn) comprenant un pré-traitement de données (PRET) dans le moyen serveur en au moins un message de données (MD) destiné à l'objet communicant, une émission (E) du message de données depuis le moyen serveur vers l'objet communicant et une réception (R) par le moyen serveur d'un acquittement (AC) transmis par l'objet communicant, et un post-traitement de données (POST) dans le moyen serveur en dépendance de l'acquittement,
**caractérisé en ce que** l'accès à un objet communicant (Cn) visé par la campagne est autorisé (E72, E82) pour une opération unitaire pendant que le moyen serveur (SAC, BD) gère le pré-traitement de données (PRET) pour l'objet communicant (Cn) pendant la campagne, et est interdit (E3) pour une opération unitaire relative à un objet communicant (Cn) visé par la campagne dès que l'accès est requis lorsque le moyen serveur (SAC, BD) gère pendant la campagne l'émission (E) de message de données (MD) vers l'objet communicant (Cn), la réception (R) d'acquittement (AC) transmis par l'objet communicant et le post-traitement de données (POST) relatifs à l'objet communicant.

2. Procédé conforme à la revendication 1, selon lequel le pré-traitement de données (PRET) pour l'objet communicant (Cn) comporte un formatage des données en des messages (MD), et les données sont reformatées (E74) après que l'accès à l'objet communicant (Cn) visé par la campagne ait été requis pour une opération unitaire et l'opération unitaire ait été exécutée (E7) pendant ou après le formatage de tous les messages destinés à l'objet communicant pendant le pré-traitement de données (PRET) de la campagne.

3. Procédé conforme à la revendication 1 ou 2, selon lequel les pré-traitements de données (P1) et post-traitements de données (P3) relatifs aux objets communicants (C1 - CN) pendant la campagne sont respectivement exécutés avant et après les émissions de message de données et les réceptions d'acquittement (P2) relatifs aux objets communicants, et le moyen serveur (SAC, BD) ne communique avec le réseau de radiocommunications (RR) que pendant les émissions de message de données et les réceptions d'acquittement (P2), et
tout accès requis à un objet communicant (Cn) visé par la campagne est interdit pendant les émissions de message de données et les réceptions d'acquittement (P2) et les post-traitements de données (P3) relatifs aux objets communicants de la campagne.

4. Procédé conforme à la revendication 3, selon lequel les pré-traitements de données (P1) relatifs à des objets communicants ayant au moins une caractéristique commune ont une partie commune exécutée une seule fois avant les émissions de message de données et les réceptions d'acquittement (P2) .

5. Procédé conforme à la revendication 3 ou 4, selon lequel les post-traitements de données (P3) relatifs à des objets communicants ayant au moins une caractéristique commune ont une partie commune exécutée une seule fois après les émissions de message de données et les réceptions d'acquittement (P2).

6. Procédé conforme à l'une quelconque des revendications 1 à 5, selon lequel les messages de données (MD) et les acquittements (AC) sont respectivement émis et reçus par le moyen serveur (SAC, BD) à travers une passerelle de communication (SC) pendant au moins une plage horaire prédéterminée (P2) et avec un débit maximum dépendant du fonctionnement de la passerelle de communication.

7. Serveur (SAC) comprenant au moins un module unitaire (MU) et un module de campagne (MC) pour interdire des opérations unitaires de téléchargement de données requis par le module unitaire dans des objets communicants portables (C1 - CN) à travers un réseau de radiocommunications (RR) pendant une campagne gérée par le module de campagne et relatives à des opérations communes de téléchargement de données dans les objets communicants,
le téléchargement de données relatif à un objet communicant (Cn) comprenant un pré-traitement de données (PRET) dans le serveur en au moins un message de données (MD) destiné à l'objet communicant, une émission (E) du message de données depuis le serveur vers l'objet communicant et une réception (R) par le serveur d'un acquittement (AC) transmis par l'objet communicant, et un post-traitement de données (POST) dans le serveur en dépendance de l'acquittement,
**caractérisé en ce que** le module unitaire (MU) est autorisé à accéder à un objet communicant (Cn) visé par la campagne (E72, E82) pour une opération unitaire pendant que le module de campagne (MC) gère le pré-traitement de données (PRET) pour l'objet communicant (Cn) pendant la campagne, et est interdit d'accès pour une opération unitaire relative à un objet communicant (Cn) visé par la campagne dès qu'il requiert l'accès lorsque le module de campagne (MC) gère pendant la campagne l'émission (E) de message de données (MD) vers l'objet communicant (Cn), la réception (R) d'acquittement (AC) transmis par l'objet communicant et le post-traitement de données (POST) relatifs à l'objet communicant.

8. Serveur conforme à la revendication 7, dans lequel le module de campagne (MC) met un indicateur d'accès (IAn) associé à un objet communicant (Cn) à un premier état dès qu'une base de données (BD) liée au serveur détecte une requête d'accès (RQA) établie par le module unitaire (MU) pour accéder à l'objet communicant (Cn) entre le début de l'émission (E) de tout message de données pendant la campagne vers l'objet communicant et la fin du post-traitement de données (POST) pendant la campagne en dépendance de l'acquittement reçu transmis par l'objet communicant en réponse au message de données,
le module de campagne (MC) met l'indicateur d'accès associé à l'objet communicant (Cn) à un deuxième état à la fin dudit post-traitement de données (POST) de la campagne pour ledit objet communicant, et
le module unitaire (MU) requérant l'accès à l'objet communicant (Cn) n'est autorisé à accéder à l'objet communicant pendant le pré-traitement de données (PRE) pendant la campagne qu'après que la base de données (BD) ait lu l'indicateur d'accès associé à l'objet communicant au deuxième état.

9. Serveur conforme à la revendication 7 ou 8, **caractérisé en ce que** le module de campagne (MC) comprend un module de pré-traitement (M1) pour pré-traiter des données en des messages de données respectivement destinés aux objets communicants (C1 - CN) pendant que le serveur ne communique pas avec le réseau de radiocommunications (RR), un module d'émission-réception (M2) pour émettre les messages de données vers les objets communicants et recevoir des acquittements transmis par les objets communicants à travers le réseau de radiocommunications (RR) en réponse aux messages de données, et un module de post-traitement (M3) pour post-traiter des données dans le serveur en fonction des acquittements reçus pendant que le serveur ne communique pas avec le réseau de radiocommunications (RR).

10. Serveur conforme à l'une quelconque des revendications 7 à 9, **caractérisé en ce que** les objets communicants sont des cartes à puce d'usager (C1 - CN) amovibles de terminaux mobiles (T1 - TN).

11. Serveur conforme à conforme à l'une quelconque des revendications 7 à 9, **caractérisé en ce que** les objets communicants sont des terminaux mobiles (T1 - TN).

12. Programme d'ordinateur sur un support d'informations, comportant des instructions de programme adaptées à la mise en oeuvre d'un procédé pour interdire des opérations unitaires de téléchargement de données depuis un moyen serveur (SAC, BD) dans des objets communicants portables (C1 - CN) à travers un réseau de radiocommunications (RR) pendant une campagne d'opérations communes de téléchargement de données depuis le moyen serveur dans les objets communicants, lorsque ledit programme est chargé et exécuté dans le moyen serveur, **caractérisé en ce qu'**il comprend des instructions (MU) autorisant à accéder à un objet communicant (Cn) visé par la campagne (E72, E82) pour une opération unitaire pendant que des instructions de campagne (MC) exécutent le pré-traitement de données (PRET) pour l'objet communicant (Cn) pendant la campagne, et des instructions interdisant l'accès à un objet communicant (Cn) visé par la campagne pour une opération unitaire dès que l'accès est requis lorsque les instructions de campagne (MC) exécutent pendant la campagne l'émission (E) de message de données (MD) vers l'objet communicant (Cn), la réception (R) d'acquittement (AC) transmis par l'objet communicant et le post-traitement de données (POST) relatifs à l'objet communicant.

13. Programme d'ordinateur conforme à la revendication 12, comprenant des instructions de pré-traitement (M1) pour pré-traiter des données en des messages de données respectivement destinés aux objets communicants (C1 - CN) pendant que le moyen serveur ne communique pas avec le réseau de radiocommunications (RR), des instructions d'émission-réception (M2) pour émettre les messages de données vers les objets communicants et recevoir des acquittements transmis par les objets communicants à travers le réseau de radiocommunications (RR) en réponse aux messages de données, et des instructions de post-traitement (M3) pour post-traiter des données dans le moyen serveur en fonction des acquittements reçus pendant que le moyen serveur ne communique pas avec le réseau de radiocommunications.

## Claims

1. A method for prohibiting unit operations of data downloading from a server means (SAC, BD) into portable communicating objects (C1 - CN) through a radiocommunications network (RR) during a campaign of common operations of data downloading from the server means into the communicating objects,
downloading data relating to a communicating object (Cn) including a pre-processing of data (PRET) in the server means into at least one data message (MD) intended for the communicating object, one emission (E) of the data message from the server means to the communicating object and a reception (R) by the server means of an acknowledgement (AC) transmitted by the communicating object, and a post-processing of data (POST) in the server means, depending on the acknowledgement,
**characterized in that** the access to a communicating object (Cn) targeted by the campaign is authorized (E72, E82) for a unit operation when the server means (SAC, BD) manages the pre-processing of data (PRET) for the communicating object (Cn) during the campaign, and is prohibited (E3) for a unit operation relating to one communicating object (Cn) targeted by the campaign as soon as the access is requested when the server means (SAC, BD) manages, during the campaign, the emission (E) of data messages (MD) to the communicating object (Cn), the reception (R) of acknowledgment (AC) transmitted by the communicating object and the post-processing of data (POST) relating to the communicating object.

2. A method according to claim 1, wherein the pre-processing of data (PRET) for the communicating object (Cn) includes the formatting of data into messages (MD), and the data are re-formatted (E74) after the access to the communicating object (Cn) targeted by the campaign has been requested for a unit operation and the unit operation has been executed (E7) during or after the formatting of all the messages intended for the communicating object during the pre-processing of data (PRET) of the campaign.

3. A method according to claim 1 or 2, wherein the pre-processing of data (P1) and the post-processing (P3) of data relating to the communicating objects (C1 - CN) during the campaign are respectively executed before and after the emissions of data messages and the receptions of acknowledgements (P2) relating to the communicating objects, and the server means (SAC, BD) communicates with the radiocommunications network (RR) only during the emissions of data messages and the receptions of acknowledgements (P2), and
any requested access to a communicating object (Cn) targeted by the campaign is prohibited during the emissions of data messages and the receptions of acknowledgements (P2) and the post-processing of data (P3) relating to the communicating objects of the campaign.

4. A method according to claim 3, wherein the pre-processing of data (P1) relating to communicating objects having at least one common characteristic have a common part executed only once before the emissions of data messages and the receptions of acknowledgements (P2).

5. A method according to claim 3 or 4, wherein the post-processing of data (P3) relating to communicating objects having at least one common characteristic have a common part executed only once after the emissions of data messages and the receptions of acknowledgements (P2).

6. A method according to any one of claims 1 to 5, wherein the data messages (MD) and the acknowledgements (AC) are respectively emitted and received by the server means (SAC, BD) through a communication gateway (SC) during at least a predetermined time slot (P2) and with a maximum rate depending on the operation of the communication gateway.

7. A server (SAC) including at least one unit module (MU) and a campaign module (MC) for prohibiting unit operations of data downloading required by the unit module into portable communicating objects (C1 - CN) through a radiocommunications network (RR) during a campaign managed by the campaign module and relating to common operations of data downloading into the communicating objects,
the downloading of data relating to a communicating object (Cn) including a pre-processing of data (PRET) into the server into at least one data message (MD) intended for the communicating object, an emission (E) of the data message from the server to the communicating object and a reception (R) by the server of an acknowledgement (AC) transmitted by the communicating object, and a post-processing of data (POST) in the server depending on the acknowledgement,
**characterized in that** the unit module (MU) is authorized to access a communicating object (Cn) targeted by the campaign (E72, E82) for a unit operation when the campaign module (MC) manages the pre-processing of data (PRET) for the communicating object (Cn) during the campaign, and is denied access for a unit operation relating to a communicating object (Cn) targeted by the campaign as soon as it requests the access, when the campaign module (MC) manages, during the campaign, the emission (E) of data messages (MD) to the communicating object (Cn), the reception (R) of the acknowledgement (AC) transmitted by the communicating object and the post-processing of data (POST) relating to the communicating object.

8. A server according to claim 7, wherein the campaign module (MC) switches an access indicator (Ian) associated with a communicating object (Cn) to a first state as soon as a data base (BD) connected to the server detects a request for access (RQA) established by the unit module (MU) to access the communicating object (Cn) between the beginning of the emission (E) of any data message during the campaign to the communicating object and the end of the post-processing of data (POST) during the campaign depending on the received acknowledgement transmitted by the communicating object in answer to the data message,
the campaign module (MC) switches the access indicator associated with the communicating object (Cn) to a second state at the end of said post-processing of data (POST) of the campaign for said communicating object, and
the unit module (MU) requesting the access to the communicating object (Cn) is authorized to access the communicating object during the pre-processing of data (PRE) during the campaign only after the data base (BD) has read the access indicator associated with the communicating object in the second state.

9. A server according to claim 7 or 8, **characterized in that** the campaign module (MC) includes a pre-processing module (M1) for pre-processing data into data messages respectively intended for the communicating objects (C1 - CN) when the server is not communicating with the radiocommunications network (RR), a transmit-receive module (M2) for emitting the data messages to the communicating objects and receiving acknowledgements transmitted by the communicating objects through the radiocommunications network (RR) in answer to the data messages, and a post-processing module (M3) for post-processing the data in the server as a function of the acknowledgements received when the server is not communicating with the radiocommunications network (RR).

10. A server according to any one of claims 7 to 9, **characterized in that** the communicating objects are subscribers' removable chip cards (C1 - CN) of mobile data terminals (T1 - TN).

11. A server according to any one of claims 7 to 9, **characterized in that** the communicating objects are mobile data terminals (T1 - TN).

12. A computer program on an information medium, including program instructions adapted to the implementation of a method for prohibiting unit operations of data downloading from a server means (SAC, BD) into portable communicating objects (C1 - CN) through a radiocommunications network (RR) during a common operation campaign of data downloading from the server means into the communicating objects, when said program is loaded and executed in the server means, **characterized in that** it includes instructions (MU) authorizing access to a communicating object (Cn) targeted by the campaign (E72, E82) for a unit operation when campaign instructions (MC) are executing the pre-processing of data (PRET) for the communicating object (Cn) during the campaign, and instructions prohibiting access to a communicating object (Cn) targeted by the campaign for a unit operation as soon as the access is requested when the campaign instructions (MC) execute, during the campaign, the emission (E) of data messages (MD) to the communicating object (Cn), the reception (R) of acknowledgements (AC) transmitted by the communicating object and the post-processing of data (POST) relating to the communicating object.

13. A computer program according to claim 12, including pre-processing (M1) instructions for pretreating data into data messages respectively intended for the communicating objects (C1 - CN) when the server means is not communicating with the radiocommunications network (RR), transmit-receive (M2) instructions for emitting the data messages to the communicating objects and receiving acknowledgements transmitted by the communicating objects through the radiocommunications network (RR) in answer to the data messages, and post-processing (M3) instructions for post-processing data in the server means as a function of the acknowledgements received when the server means is not communicating with the radiocommunications network.

## Patentansprüche

1. Verfahren für die Unterbindung von Einzelvorgängen zur Fernladung von Daten ab einem Servermittel (SAC, BD) in mobile kommunizierende Objekte (C1 - CN) durch ein Funkverbindungsnetz (RR) während einer Kampagne gemeinsamer Vorgänge zur Fernladung von Daten ab dem Servermittel in die mobilen kommunizierenden Objekte,
wobei das Fernladen von Daten bezüglich eines kommunizierenden Objekts (Cn) eine Vorverarbeitung von Daten (PRET) im Servermittel in mindestens eine Datenmeldung (MD) umfasst, die für das kommunizierende Objekt bestimmt ist, eine Sendung (E) der Datenmeldung ab dem Servermittel zum kommunizierenden Mittel und einen Empfang (R) einer Quittierung (AC) durch das Servermittel, die vom kommunizierenden Mittel übermittelt wird, und eine Nachverarbeitung von Daten (POST) im Servermittel in Abhängigkeit von der Quittierung,
**dadurch gekennzeichnet, dass** der von der Kampagne angezielte Zugang zu einem kommunizierenden Mittel (Cn) für einen Einzelvorgang genehmigt ist (E72, E82), während das Servermittel (SAC, BD) die Vorverarbeitung von Daten (PRET) für das kommunizierende Objekt (Cn) während der Kampagne managt und untersagt ist (E3) für einen Einzelvorgang bezüglich eines von der Kampagne angezielten kommunizierenden Objekts (Cn), sobald der Zugang erforderlich ist, wenn das Servermittel (SAC, BD) während der Kampagne zur Sendung (E) der Datenmeldung (MD) an ein kommunizierendes Objekt (Cn) den Empfang (R) der Quittierung (AC) managt, die vom kommunizierenden Objekt übermittelt wird, und die Nachverarbeitung der Daten (POST) bezüglich des kommunizierenden Objekts.

2. Verfahren nach Anspruch 1, **dadurch gekennzeichnet, dass** die Vorverarbeitung von Daten (PRET) für das kommunizierende Objekt (Cn) eine Formatierung der Daten in Meldungen (MD) umfasst, und dass die Daten neu formatiert werden (74), nachdem der von der Kampagne angezielte Zugang zum kommunizierenden Objekt (Cn) für einen Einzelvorgang gefordert worden ist und der Einzelvorgang während oder nach der Formatierung aller Meldungen ausgeführt worden ist (E7), die für das kommunizierende Objekt bestimmt waren, und dies während der Vorverarbeitung von Daten (PRET) der Kampagne.

3. Verfahren nach Anspruch 1 oder 2, **dadurch gekennzeichnet, dass** die Vorverarbeitungen von Daten (P1) und die Nachverarbeitungen von Daten (P3) bezüglich der kommunizierenden Objekte (C1 - Cn) während der Kampagne vor beziehungsweise nach den Sendungen von Datenmeldungen und den Eingängen der Quittierung (P2) bezüglich der kommunizierenden Objekte ausgeführt werden, und dass das Servermittel (SAC, BD) nur während den Sendungen von Datenmeldungen und den Eingängen der Quittierungen (P2) mit dem Funkverbindungsnetz (RR)kommuniziert,
und dass jeder von der Kampagne angezielte Zugang zu einem kommunizierenden Objekt (Cn) während den Sendungen von Datenmeldungen und den Eingängen der Quittierung (P2) und den Nachverarbeitungen von Daten (P3) bezüglich der kommunizierenden Objekte der Kampagne untersagt ist.

4. Verfahren nach Anspruch 3, **dadurch gekennzeichnet, dass** die Vorverarbeitungen von Daten (P1) bezüglich kommunizierender Objekte, die zumindest ein gemeinsames Merkmal haben, einen gemeinsamen Teil haben, der vor den Sendungen von Datenmeldungen und den Eingängen von Quittierungen ein einziges Mal ausgeführt wird.

5. Verfahren nach Anspruch 3 oder 4, **dadurch gekennzeichnet, dass** die Nachverarbeitungen von Daten (P3) bezüglich kommunizierender Objekte, die zumindest ein gemeinsames Merkmal haben, einen gemeinsamen Teil haben, der nach den Sendungen von Datenmeldungen und den Eingängen von Quittierungen ein einziges Mal ausgeführt wird.

6. Verfahren nach einem beliebigen der vorstehenden Ansprüche 1 bis 5, **dadurch gekennzeichnet, dass** die Datenmeldungen (MD) und die Quittierungen (AC) vom Servermittel (SAC, BD) durch einen Kommunikationsübergang (SC) in einem vorbestimmten Zeitbereich (P2) und mit einer maximalen Rate je nach Betrieb des Kommunikationsübergangs gesendet beziehungsweise empfangen werden.

7. Server (SAC), der zumindest ein Einzelmodul (MU) und ein Kampagnenmodul (MC) umfasst, um Einzelvorgänge der vom Einzelmodul geforderten Fernladung von Daten in mobile kommunizierende Objekte (C1 - Cn) durch ein Funkverbindungsnetz (RR) während einer Kampagne zu untersagen, die vom Kampagnenmodul gemanagt wird, und die sich auf gemeinsame Vorgänge der Fernladung von Daten in die kommunizierenden Objekte beziehen,
wobei das Fernladen von Daten bezüglich eines kommunizierenden Objekts (Cn) eine Vorverarbeitung von Daten (PRET) im Server in mindestens eine Datenmeldung (MD) umfasst, die für das kommunizierende Objekt bestimmt ist, eine Sendung (E) der Datenmeldung ab dem Server zum kommunizierenden Mittel und einen Empfang (R) einer Quittierung (AC) durch den Server, die vom kommunizierenden Mittel übermittelt wird, und eine Nachverarbeitung von Daten (POST) im Server in Abhängigkeit von der Quittierung,
**dadurch gekennzeichnet, dass** das Einzelmodul (MU) genehmigten Zugang zu einem kommunizierenden Mittel (Cn) hat, der von der Kampagne (E72, E82) für einen Einzelvorgang angezielt wird, während das Kampagnenmodul (MC) die Vorverarbeitung von Daten (PRET) für das kommunizierende Objekt (Cn) während der Kampagne managt, und es keinen Zugang für einen Einzelvorgang bezüglich eines von der Kampagne angezielten kommunizierenden Objekts (Cn) hat, sobald der Zugang erforderlich ist, wenn das Kampagnenmodul (MC) während der Kampagne zur Sendung (E) der Datenmeldung (MD) an das kommunizierende Objekt (Cn) den Empfang (R) der Quittierung (AC) managt, die vom kommunizierenden Objekt übermittelt wird, und die Nachverarbeitung von Daten (POST) bezüglich des kommunizierenden Objekts.

8. Server nach Anspruch 7, **dadurch gekennzeichnet, dass** das Kampagnenmodul (MC) einen zu einem kommunizierenden Objekt (Cn) gehörenden Zugangsindikator (IAn) in einen ersten Zustand setzt, sobald eine mit dem Server verbundene Datenbank (BD) einen Zugangsantrag (RQA) entdeckt, der vom Einzelmodul (MU) erstellt wird, um Zugang zum kommunizierenden Objekt (Cn) zu bekommen, und dies zwischen dem Beginn der Sendung (E) jeder Datenmeldung während der Kampagne zum kommunizierenden Objekt und dem Ende der Nachverarbeitung von Daten (POST) während der Kampagne in Abhängigkeit von der erhaltenen Quittierung, die vom kommunizierenden Objekt in Antwort auf die Datenmeldung übermittelt wird,
dass das Kampagnenmodul (MC) den zum kommunizierenden Objekt (Cn) gehörenden Zugangsindikator am Ende der besagten Nachverarbeitung von Daten (POST) der Kampagne für das besagte kommunizierende Objekt in einen zweiten Zustand setzt,
und dass das Einzelmodul (MU), das den Zugang zum kommunizierenden Objekt (Cn) anfordert, nur während der Vorverarbeitung von Daten (PRE) während der Kampagne und erst dann Zugang zum kommunizierenden Objekt bekommt, wenn die Datenbank (BD) den zum kommunizierenden Objekt gehörenden Zugangsindikator im zweiten Zustand gelesen hat.

9. Server nach Anspruch 7 oder 8, **dadurch gekennzeichnet, dass** das Kampagnenmodul (MC) ein Vorverarbeitungsmodul (M1) für die Vorverarbeitung der Daten in Datenmeldungen umfasst, die für die jeweiligen kommunizierenden Objekte (C1 - CN) bestimmt sind, während der Server nicht mit dem Funkverbindungsnetz (RR) kommuniziert, ein Sende-Empfangsmodul (M2) für die Sendung der Datenmeldungen an die kommunizierenden Objekte und den Empfang der Quittierungen, die von den kommunizierenden Objekten durch das Funkverbindungsnetz (RR) in Antwort auf die Datenmeldungen übermittelt werden, und ein Nachverarbeitungsmodul (M3) für die Nachverarbeitung der Daten im Server je nach den Quittierungen, die eingegangen sind, während der Server nicht mit dem Funkverbindungsnetz (RR) kommuniziert.

10. Server nach einem beliebigen der vorstehenden Ansprüche 7 bis 9, **dadurch gekennzeichnet, dass** die kommunizierenden Objekte Chipkarten von Benutzern (C1 - CN) und aus mobilen Terminalen (T1 - TN) entfernbar sind.

11. Server nach einem beliebigen der vorstehenden Ansprüche 7 bis 9, **dadurch gekennzeichnet, dass** die kommunizierenden Objekte mobile Terminale (T1 - TN) sind.

12. Rechnerprogramm auf einem Informationsträger, das geeignete Programmanweisungen für den Einsatz eines Verfahrens für die Unterbindung von Einzelvorgängen zur Fernladung von Daten ab einem Servermittel (SAC, BD) in mobile kommunizierende Objekte (C1 - CN) durch ein Funkverbindungsnetz (RR) während einer Kampagne gemeinsamer Vorgänge zur Fernladung von Daten ab dem Servermittel in die mobilen kommunizierenden Objekte umfasst, wenn das besagte Programm in das Servermittel geladen und dort ausgeführt wird, **dadurch gekennzeichnet, dass** es Anweisungen (MU) enthält, mit denen der von der Kampagne (E72, E82) angezielte Zugang zu einem kommunizierenden Objekt (Cn) für einen Einzelvorgang genehmigt ist, während Anweisungen zur Kampagne (MC) die Vorverarbeitung von Daten (PRET) für das kommunizierende Objekt (Cn) während der Kampagne durchführen, und Anweisungen zur Unterbindung des Zugangs zu einem von der Kampagne angezielten kommunizierenden Objekt (Cn) für einen Einzelvorgang, sobald der Zugang erforderlich ist, wenn die Anweisungen der Kampagne (MC) während der Kampagne das Senden (E) von Datenmeldungen (MD) an das kommunizierende Objekt (Cn) ausführen, den Empfang (R) der Quittierung (AC), die vom kommunizierenden Objekt übermittelt wird, und die Nachverarbeitung von Daten (POST) bezüglich des kommunizierenden Objekts.

13. Rechnerprogramm nach Anspruch 12, das Anweisungen zur Vorverarbeitung (M1) enthält, damit Daten in Datenmeldungen vorverarbeitet werden, die für die jeweiligen kommunizierenden Objekte (C1 - CN) bestimmt sind, während das Servermittel nicht mit dem Funkverbindungsnetz (RR) kommuniziert, Anweisungen zum Senden-Empfangen (M2) für die Sendung der Datenmeldungen an die kommunizierenden Objekte und den Empfang der Quittierungen, die von den kommunizierenden Objekten durch das Funkverbindungsnetz (RR) in Antwort auf die Datenmeldungen übermittelt werden, und Anweisungen zur Nachverarbeitung (M3), damit Daten im Servermittel je nach den Quittierungen nachverarbeitet werden, die eingegangen sind, während das Servermittel nicht mit dem Funkverbindungsnetz (RR) kommuniziert.
